# EUROPEAN PATENT APPLICATION

(11) **EP 2 219 370 A1**
(43) Date of publication of application: **18.08.2010**
(21) Application number: 10153461.8
(22) Date of filing: 12.02.2010
(51) Int. Cl.: H04N 5/46, H04N 5/50

(54) **Digital television broadcast receiver**

(30) Priority: 12.02.2009 JP 2009029355
(71) Applicant: Funai Electric Co., Ltd., Nakagaito Daito-shi Osaka 574-0013 (JP)
(72) Inventor: Tokoshima, Susumu, Daito-shi Osaka 574-0013 (JP); Yamada, Koujirou, Daito-shi Osaka 574-0013 (JP); Suzu, Hirokazu, Daito-shi Osaka 574-0013 (JP)
(74) Representative: Grünecker, Kinkeldey, Stockmair & Schwanhäusser Anwaltssozietät

(57) **Abstract**

A digital television broadcast receiver includes a memory section, a reception section and a control section. The memory section stores a channel list associating selected channel numbers with broadcast signals, respectively. Each of the broadcast signals includes a country identifier indicative of a country from which the broadcast signal is transmitted. The memory section stores reception country information indicative of a country that is preset as a reception country, and compliance information indicative of countries that have a rule to transmit a broadcast signal with a logical channel number for high-resolution broadcast. The control section registers the logical channel number for the high-resolution broadcast of a first broadcast signal if the reception country matches both the country of the country identifier and one of the countries of the compliance information, and if the first broadcast signal includes the logical channel number for the high-resolution broadcast.

## Description

### CROSS-REFERENCE TO RELATED APPLICATIONS

This application claims priority to Japanese Patent Application No. 2009-029355 filed on February 12, 2009. The entire disclosure of Japanese Patent Application No. 2009-029355 is hereby incorporated herein by reference.

### BACKGROUND

### Field of the Invention

The present invention generally relates to a digital television broadcast receiver. More specifically, the present invention relates to a digital television broadcast receiver that sets channel numbers for broadcast signals appropriately. Background Information

When channel constitution information included in a transport stream (TS) is registered to a digital television, channel numbers need to be assigned for display to the viewer. For example, in the Digital Video Broadcasting standard DVB-S1 (ETSI EN 300 468) issued as a guideline related to how to use tables included in a TS (e.g., technical reference materials for European standards), the TS for digital television broadcast is defined to include a Network Information Table (NIT). The NIT associates information about a transmission path with a broadcast service, and includes channel constitution information and broadcast country information. The channel constitution information includes, for example, a logical channel number (LCN) assigned uniquely to a broadcast station, and identification information that is unique to the broadcast service (also called program number or service ID). The broadcast country information includes, for example, an original network ID assigned uniquely for each country.

In European countries, when reception of digital television broadcast signals is set up, there are cases in which broadcast signals are received not only from the home country, but also from other nearby countries, etc. In such cases, the LCN assigned to the broadcast signal by one broadcast station can be the same as the LCN assigned by the broadcast station in another country. If this happens, and the LCN of a broadcast signal that is received first is merely set as a channel number, the channel numbers can be confusingly set up to the user.

In view of this, with a conventional digital television broadcast receiver and a conventional broadcast reception method, channel setup processing is performed according to channel specification information (see Japanese Laid-Open Patent Application Publication 2008-252560, for example).

However, with the conventional digital television broadcast receiver and the conventional broadcast reception method, if the LCNs from different broadcast signals are the same, the user ends up having to assign channel numbers to the various broadcast stations, and this can be complicated.

Also, in Europe, there are countries that specify that the LCN be included in digital television broadcast data, and countries that do not. Therefore, with the conventional digital television broadcast receiver and the conventional broadcast reception method, if the digital television broadcast data that does not contain an LCN is received in a country where it is specified that an LCN be included in the digital television broadcast data, a channel list of the channel numbers is confusing since entries are registered to the channel list in the order they are acquired.

Also, more recently in Europe, there are countries that have introduced new regulations related to SD (Standard Definition)/HD (High Definition) simulcasts of the same broadcast. Therefore, assigning channel numbers becomes more complicated.

### SUMMARY

The present invention was conceived in light of the above-mentioned problems. One object of the present invention is to provide a digital television broadcast receiver with which channel numbers can be appropriately set for a country in which the digital television broadcast receiver is installed.

In accordance with one aspect of the present invention, a digital television broadcast receiver includes a memory section, a reception section and a control section. The memory section is configured to store a channel list associating selected channel numbers with broadcast signals of digital television broadcast, respectively. Each of the broadcast signals includes a country identifier indicative of a country from which the broadcast signal is transmitted. The memory section is further configured to store reception country information indicative of a country that is preset as a reception country, and compliance information indicative of countries that have a rule to transmit a broadcast signal with a logical channel number for high-resolution broadcast. The reception section is configured to receive a first broadcast signal of the broadcast signals. The control section is configured to register the logical channel number for the high-resolution broadcast of the first broadcast signal to the channel list as a selected channel number for the first broadcast signal if the reception country of the reception country information stored in the memory section matches both the country of the country identifier of the first broadcast signal and one of the countries of the compliance information stored in the memory section, and if the first broadcast signal includes the logical channel number for the high-resolution broadcast.

With this digital television broadcast receiver, it is possible to provide a digital television broadcast receiver with which channel numbers can be appropriately set for a country in which the digital television broadcast receiver is installed.

### BRIEF DESCRIPTION OF THE DRAWINGS

Referring now to the attached drawings which form a part of this original disclosure:

FIG. 1 is a block diagram illustrating a digital television in accordance with one embodiment;

FIG. 2 is a table illustrating a relationship between an original network ID for each country and logical channel numbers for standard-definition broadcast and high-definition broadcast;

FIG. 3 is a table illustrating processes selected based on a reception country setting and the original network ID;

FIG. 4 is a flowchart illustrating a registration operation of the digital television illustrated in FIG. 1; and

FIG. 5 is a flowchart illustrating the registration operation of the digital television illustrated in FIG. 1.

### DETAILED DESCRIPTION OF EMBODIMENTS

A preferred embodiment will now be explained with reference to the drawings. It will be apparent to those skilled in the art from this disclosure that the following descriptions of the preferred embodiment are provided for illustration only and not for the purpose of limiting the invention as defined by the appended claims and their equivalents.

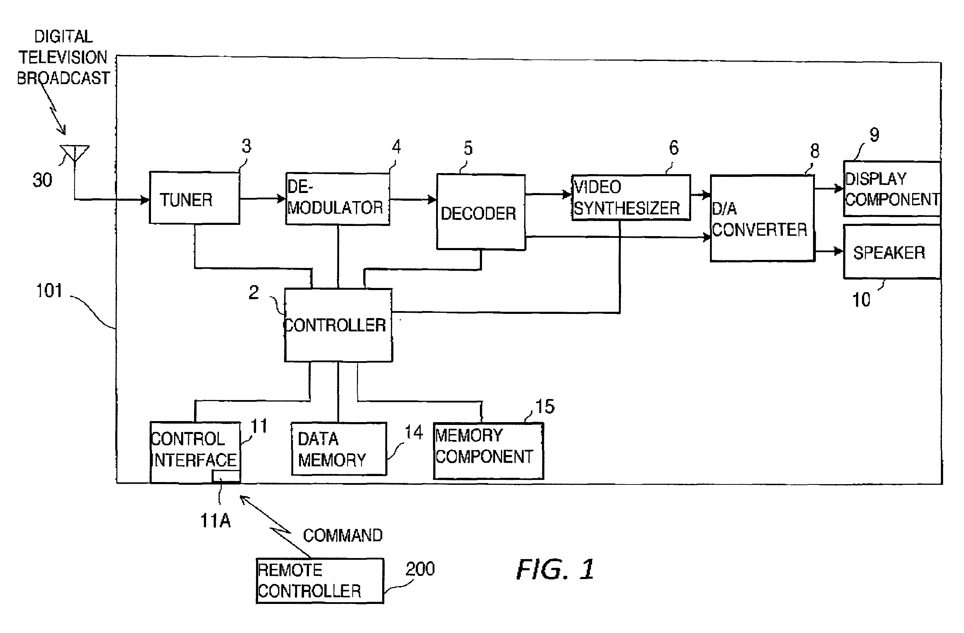

FIG. 1 is a block diagram of a digital television (e.g., digital television broadcast receiver, hereinafter "TV") 101. The TV 101 includes a controller (e.g., control section or control means) 2, a tuner (e.g., reception section or reception means) 3, a demodulator 4, a decoder 5, a video synthesizer 6, D/A converter 8, a display component 9, a speaker 10, a control interface 11, a data memory (e.g., memory section or memory means) 14, a memory component (e.g., memory section or memory means) 15. The controller 2 controls the operation of the various components of the TV 101. The tuner 3 receives television broadcast signals of digital television broadcast for selected channels via an antenna 30. The demodulator 4 demodulates the received television broadcast signal into digital data. The decoder 5 separates the demodulated digital data into video data and audio data, and expands both types of data. The video synthesizer 6 synthesizes an image based on the video data and a desired OSD (On Screen Display) image. The D/A converter 8 converts signals for the video data and audio data into analog signals. The control interface 11 receives user inputs From a remote controller 200. The data memory 14 stores registered information, such as a channel list associating selected channel numbers with the television broadcast signals, etc. The memory component 15 stores control programs for the TV 101. The display component 9 displays images on a screen based on the video data. The speaker 10 outputs sound based on the audio data.

The data memory 14 includes an EEPROM, for example. The data memory 14 stores a list of channels used in the digital television broadcast in the channel list. For example, the data memory 14 stores the list of the channels used in the digital television broadcast in association with the selected channel numbers.

The memory component 15 includes a ROM, for example. The memory component 15 has pre-stored control programs that describe how to control the various components of the TV 101. The memory component 15 also stores tables including information about original network IDs (e.g., country identifier) for each country and whether or not the country is compliant with logical channel numbers (LCN) (i.e., whether or not the country has a rule to transmit a television broadcast signal including information about the LCN), and the like.

The controller 2 includes a microprocessor, for example. The controller 2 has a RAM (not shown) as a work field for expanding data and so forth to be processed by the control programs, and a clock (not shown) for keeping track of the current time in the controller 2.

The control interface 11 has a light receiver 11A that receives a signal sent from the remote controller 200. The control interface 11 and the remote controller 200 have the same keys for operating the TV 101.

The tuner 3 receives (or extracts), and outputs a television broadcast signal for a physical channel selected based on a command from the controller 2 from among television broadcast signals received by the antenna 30. For example, when a user select a selected channel number with the control interface 11, then the controller 2 sends a command to select a physical channel corresponding to the selected channel number by referring to the channel list, and the tuner 3 receives a television broadcast signal for the physical channel.

The demodulator 4 demodulates the television broadcast signal outputted from the tuner 3, and acquires and outputs a transport stream (TS), which includes digital data. In the TS, TS packets containing various television program video, audio, and other such element signals are multiplexed. Also, the TS includes a Network Information Table (NIT). The NIT associates information about a transmission path with a broadcast service, and includes channel constitution information and broadcast country information. The channel constitution information includes, for example, a LCN assigned uniquely to a broadcast station, and identification information that is unique to the broadcast service (also called program number or service ID). The broadcast country information includes, for example, an original network ID (e.g., country identifier) assigned uniquely for each country to identify the country from which the television broadcast signal is transmitted.

The decoder 5 separates and extracts the video data, audio data, and control data from the TS outputted from the demodulator 4. The separated and extracted video data is encoded by MPEG, for example. The decoder 5 then decodes and outputs the video data. The outputted video data is inputted through the video synthesizer 6 to the D/A converter 8. The decoder 5 also decodes the audio data and outputs the audio data to the D/A converter 8.

The video synthesizer 6 has a built-in video memory (not shown) that stores an OSD (On Screen Display) having text or graphics data. The video synthesizer 6 synthesizes the OSD stored in the video memory and video based on the video data based on a command from the controller 2. The video synthesizer 6 outputs the synthesized video data to the D/A converter 8. Alternatively, the video synthesizer 6 outputs the inputted video data directly to the D/A converter 8 based on a command from the controller 2.

The D/A converter 8 converts the signal for the video data outputted from the decoder 5 (including synthesized data) into an analog reproduction video signal, and outputs the analog reproduction video signal to the display component 9. The display component 9 includes an LCD (Liquid Crystal Display), for example. The D/A converter 8 converts the signal for the audio data outputted from the decoder 5 into an analog reproduction audio signal, and outputs the analog reproduction audio signal to the speaker 10.

The user listens to the audio based on the audio signal and watches the video based on the video signal outputted from the D/A converter 8, at the speaker 10 and the display component 9.

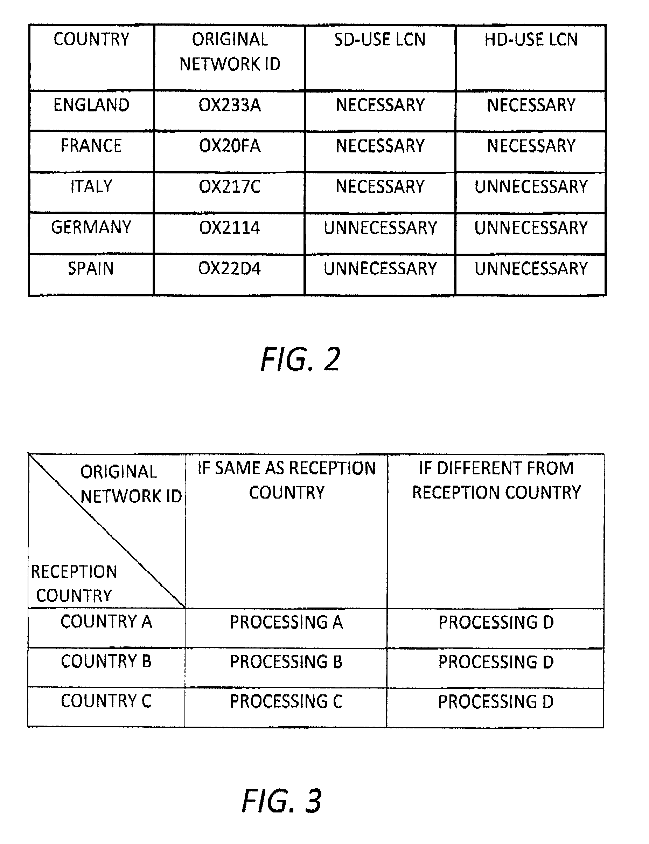

Next, the relationship between information specified in the TS of the digital television broadcast will be described through reference to FIG. 2. FIG. 2 is a table (e.g., compliance information) illustrating the relationship between the original network ID for each country and the LCN s for standard-definition (e.g., standard-resolution) broadcast and high-definition (high-resolution) broadcast that includes higher resolution video than the standard-definition broadcast. In particular, the table indicates countries that have a rule to transmit a broadcast signal with a LCN for standard definition broadcast, and countries that have a rule to transmit a broadcast signal with a LCN for high definition broadcast.

With digital television broadcasts in Europe, when channel constitution information included in a TS is registered to a digital television broadcast receiver, the channel number displayed by the digital television broadcast receiver need to be assigned.

Also, in European countries, there are countries that specify the LCN indicative of the channel number to be assigned be included in the TS, and countries that do not.

Also, recently in Europe there are countries that have introduced new regulations related to SD (Standard Definition)/HD (High Definition) simulcasts of the same broadcast (e.g., the same program). In these countries, it has been established that HD channel number information shall be included in a TS.

More specifically, as shown in FIG. 2, in England, France, and Italy, it is stipulated that a LCN for the standard definition broadcast (hereinafter "SD-use LCN" be included as the channel number information of the television broadcast signal. On the other hand, in Germany and Spain, it is stipulated that the SD-use LCN not be included in the TS. Also, in England and France, a new standard has been introduced related to the SD/HD simulcasts, and it is stipulated that a LCN for the high definition broadcast (hereinafter "HD-use LCN") be included in the TS as the channel number information of the television broadcast signal. On the other hand, in Italy, Germany, and Spain, no new standard has been introduced related to the SD/HD simulcasts, so it is not stipulated that the HD-use LCN be included in the TS.

Therefore, when it comes to TS regulations, the countries of Europe can be divided into three groups: countries where both HD-use LCNs and SD-use LCNs are required (hereinafter "A countries"), countries where SD-use LCNs are only required (hereinafter "B countries"), and countries where no LCN is required (hereinafter "C countries").

As to the TS of the digital television broadcast, it has been stipulated in a rulebook for each European country. For example, in France this stipulation is titled "SERVICES ET PROFIL DE SIGNALIZATION POUR LA DIFFUSIONDE LA TV NUMERIQUE DE TERRE, version 3.0."

As mentioned above, the European countries are divided into the three groups in terms of the TS regulations. With the TV 101, the channel numbers can be registered according to A, B, and C countries.

FIG. 3 is a table illustrating processes selected based on a reception country setting of the TV 101 and the original network ID of the television broadcast signal. The reception country setting of the TV 101 is preset and stored in the data memory 14, and indicates a country in which the TV 101 is installed as a reception country. When the reception country setting selected by the TV 101 is a country corresponding to the A country, and is a country that the original network ID of the received broadcast signal indicates (i.e., the country of the reception country setting that corresponds to the A country), then a processing A is performed as shown in FIG. 3. The processing A includes assigning the same channel numbers as the LCN to the received broadcast signal with giving priority to the HD-use LCN when the received broadcast signal (e.g., a broadcast signal in a received physical channel) includes the LCN (e.g., the HD-use LCN and the SD-use LCN). Also, a channel (e.g., a received broadcast signal) for which no LCN exists is assigned one of channel numbers from 800 up (e.g., predetermined channel number group), which has not registered in the channel list.

When the reception country setting selected by the TV 101 1 is a country corresponding to the A country, and a country of the original network ID included in the received broadcast signal is a country other than the country of the reception country setting (a country corresponding to the B or C country, for example), then a processing D is performed. In this case, the television broadcast signal from a neighboring country of the home country (e.g., the country of the reception country setting) is received. Thus, the processing D assigns one of channel numbers from 800 up, which has not registered in the channel list, to the received broadcast signal, regardless of whether or not there is an LCN in the received broadcast signal, in order to classify the received broadcast signal from the broadcast signal transmitted from the home country.

When the reception country setting selected by the TV 101 is a country corresponding to the B country, and is a country that the original network ID of the received broadcast signal indicates (i.e., the country of the reception county setting that corresponds to the B country), then, a processing B is performed. The processing B includes assigning the same channel numbers as the LCNs for channels (e.g., received broadcast signals) for which the LCNs exist. A channel for which no LCN exists is assigned one of channel numbers from 800 up (e.g., predetermined channel number group), which has not registered in the channel list.

Also, when the reception country setting selected by the TV 101 is a country corresponding to the B country, and a country of the original network ID included in the received broadcast signal is a country other than the country of the reception country setting (a country corresponding to the A or C country, for example), then the processing D is performed.

When the reception country setting selected by the TV 101 is a country corresponding to the C country, and is a country that the original network ID of the received broadcast signal indicates (i.e., the country of the reception country setting that corresponds to the C country), then a processing C is performed. The processing C includes sequentially assigning channel numbers to channels (e.g., the received broadcasting signals) by scanning the channels from lowest to highest frequency since the channels include no LCNs.

Also, when reception country setting selected by the TV 101 is a country corresponding to the C country, and a country of the original network ID included in the received broadcast signal is a country other than the country of the reception country setting (a country corresponding to the A or B country, for example), then the processing D is performed.

With the TV 101, registration of the channel numbers can be carried out properly for each of the countries in Europe by setting the channel number as mentioned above.

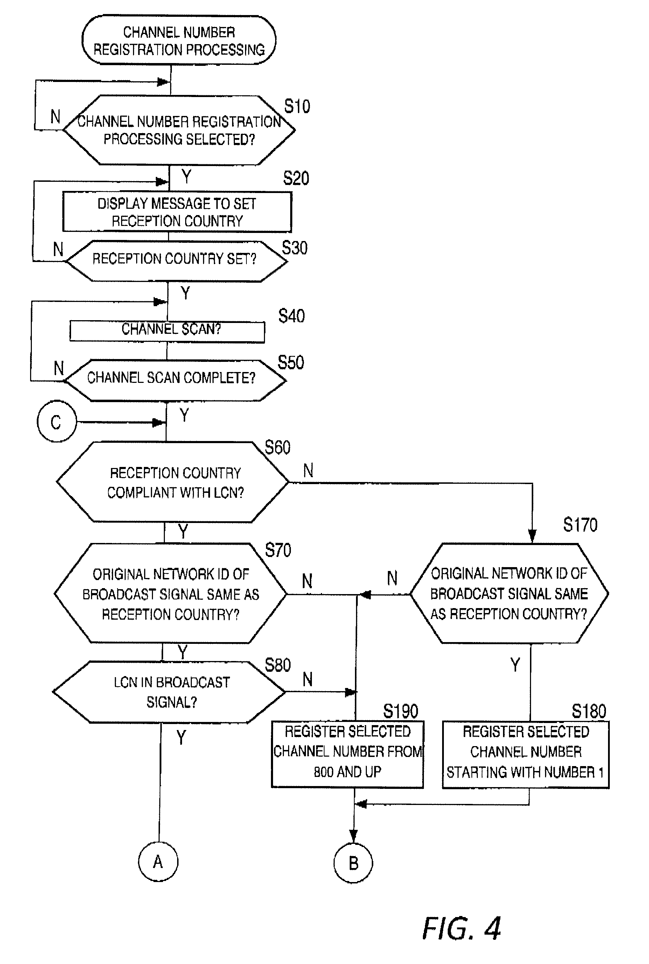

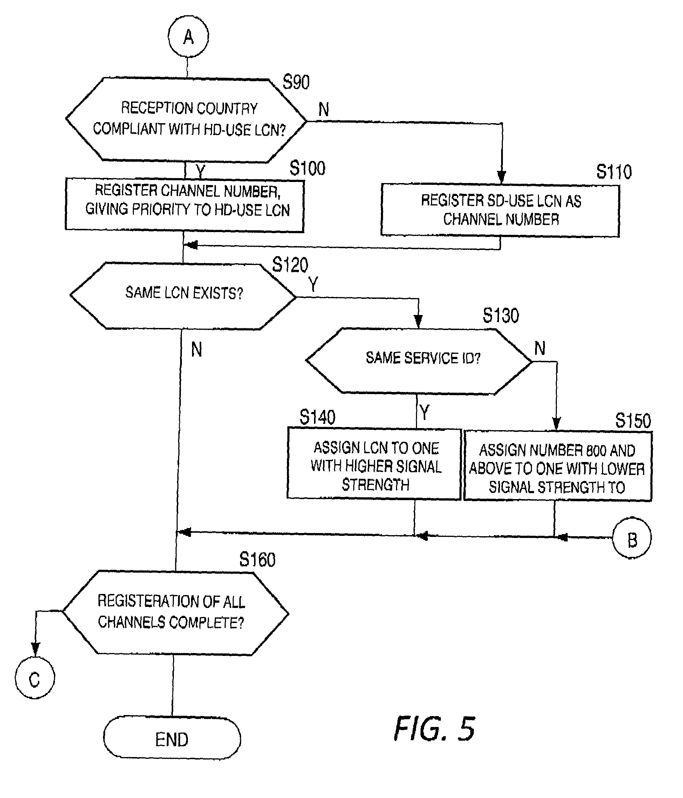

Next, the registration of the channel numbers (e.g., selected channel numbers) in the TV 101 will be described through reference to FIGS. 5 and 5. FIGS. 4 and 5 are flowcharts illustrating the registration operation of the channel numbers of the TV 101.

If the controller 2 of the TV 101 detects that the category "channel number registration processing" is selected on the menu screen displayed on the display component 9 when the user of the TV 101 operates the control interface 11 or the remote controller 200 ("Yes" in Step S10), then the controller 2 of the TV 101 displays on the display component 9 a message to prompt the user to set the reception country (Step S20). The "channel number registration processing" is a processing for producing the channel list that includes a list of channels used in digital television broadcasting.

If the controller 2 detects that the reception country has been set ("Yes" in Step S30), then the controller 2 starts scanning of the channels, and confirms which channels (e.g., television broadcast signals) can be received (Step S40).

When the controller 2 finish the channel scanning operation ("Yes" in Step S50), then the controller 2 reads a table corresponding to the reception country stored in the memory component 15, and confirms whether or not the selected reception country is a country that is compliant with the LCN (i.e., a country that has a rule to transmit the TS with the LCN) (Step S60). If the controller 2 determines that the selected reception country is the country supporting the setting of the LCNs ("Yes" in Step S60), then the following processing is performed, starting with a channel (e.g., broadcast signal) of the lowest frequency. Specifically, the controller 2 determines whether or not the original network ID included in the TS of the received digital television broadcast matches the selected reception country stored in the data memory 14 (Step S70). If the controller 2 determines that the original network ID matches the selected reception country ("Yes" in Step S70), then the controller 2 further determines whether or not LCN information (or LCN) is included for the channel detected from the received digital television broadcast (Step S80). If the controller 2 determines that the LCN is included in the TS ("Yes" in Step S80), then the controller 2 further determines whether or not the selected reception country is an HD-use LCN compliant country (e.g., A countries) (Step S90). If the setting of the reception country is to the HD-use LCN compliant country (Yes in S90), then the controller 2 registers the LCN for the channel as the channel number for the channel by giving priority to the HD-use LCN. Specifically, if the TS includes the HD-use LCN and the SD-use LCN, then the HD-use LCN is registered as the selected channel number. If the TS includes only the SD-use LCN, then the SD-usc LCN is registered as the selected channel number (Step S100).

Meanwhile, if the setting of the reception country is to an HD-use LCN noncompliant country (e.g., B countries) ("No" in Step S90), then only the SD-use LCN is found in the TS. Thus, the controller 2 registers the same channel number as the SD-use LCN as the selected channel number (Step S110).

When the controller 2 registers the selected channel number in Steps S100 or S110, the controller 2 determines whether or not the LCN included in the TS is the same LCN as the LCN that is already registered in the channel list (Step S120). If the LCN included in the TS is the same LCN as the LCN that is already registered in the channel list ("Yes" in Step S120), then the controller 2 further determines whether or not the two broadcast signals (e.g., two channels, or second and third broadcast signals) have the same service ID, that is, whether or not the two broadcast signals are transmitted from the same broadcast station (Step S130). If the service IDs are the same ("Yes" in Step S130), then the controller 2 registers the LCN of one of the broadcast signals that has a higher reception signal strength than the other of the broadcast signals as the selected channel number (Step S 140). On the other hand, if the service IDs are not the same (if the broadcast stations of the broadcast signals are different), then the controller 2 registers the LCN of the broadcast signal with a higher reception signal strength as the selected channel number, and registers a channel number from 800 up (e.g., predetermined channel number group) as the selected channel number for the broadcast signal with a lower reception signal strength (Step S150). In other words, the controller 2 registers the channel number that is different from the LCN of the broadcast signal with the lower reception signal strength as the selected channel number for the broadcast signal with the lower reception signal strength.

J When the processing in Step S 140 or S150 is finished, the controller 2 determines whether or not registration of all the channels is finished (Step S160). If all have been registered ("Yes" in Step S160), then the processing is ended. On the other hand, if not all have been registered ("No" in Step S160), then the controller 2 repeats the processing from Step S60 onward.

If the controller 2 determines that the selected reception country is not a country that is compliant with the setting of the LCNs (e.g., C country) ("No" in Step S60), then the following processing is performed, starting with a channel (e.g., broadcast signal) of the lowest frequency. In other words, if the selected reception country matches a country that allows transmitting the broadcast signal without a LCN, then the following processing is performed. Specifically, the controller 2 determines whether or the original network ID included in the TS of the received digital television broadcast matches the selected reception country stored in the data memory 14 (Step S170). If the controller 2 determines that the original network ID matches the selected reception country ("Yes" in Step S 170), then the controller 2 sequentially registers the selected channel numbers starting from number 1 for the broadcast signals (Step S 180) since no LCN is included in the broadcast signal. In particular, the controller 2 registers one of the predetermined numbers that are sequentially assigned to the broadcast signals (e.g., numbers starting from 1) to the channel list as a selected channel number for the received broadcast signal in Step S 180. Then, the controller 2 determines whether or not registration of all the channels is finished (Step S160). If all have been registered ("Yes" in Step S 160), then the processing is ended. On the other hand, if not all have been registered ("No" in Step S160), then the controller 2 repeats the processing from Step S60 onward.

On the other hand, if the controller 2 determines that the original network ID does not match the selected reception country ("No" in Step S170), then the controller 2 sequentially assign a number starting from number 800 and going up from there (e.g., predetermined channel number group) to the broadcast signal as the selected channel number for the broadcast signal (Step S190).

Also, if the controller 2 determines in Step S70 that the original network ID and the selected reception country do not match ("No" in Step S70), or if the controller 2 determines in Step S80 that the TS includes no LCN ("No" in Step S80), then the processing of Step S190 is also performed. The processing of Step S160 is then performed.

Also, in the above processing, Step S100 can be such that if a HD-use LCN for a broadcast signal is registered as a selected channel number for the broadcast signal, then the SD-use LCN for a simulcast of the broadcast signal is not registered. That is, since the HD channel and the SD channel are a simulcast, if both channels are registered, channels on which the same program is broadcast end up being registered twice. But if just the high definition channel is registered, the number of registered channels can be reduced, and registering only the high definition channels makes it easier for the user to change channels, and allows the user to view a sharp video.

In the above description, the broadcast signals from other countries other than the home country are registered to the channel numbers from 800 and up as the predetermined channel number group. However, the channel numbers used for the registration are not limited to this, and can be specified according to standards and so forth.

With the TV 101, the broadcast signals from the home country where the TV 101 is installed (e.g., the selected reception country) are set to the selected channel numbers in the order of reception or based on the LCNs of thc broadcast signals. Furthermore, the broadcast signals from other countries and so forth are registered in the predetermined channel number group. Thus, channels for viewing digital television broadcast transmitted in the home country can be easily distinguished from channels for viewing digital television broadcast from neighboring countries. Thus, with the TV 101, a digital television broadcast receiver with easy channel setup can be provided.

With the TV 101, if the reception country of the reception country setting is the country specified to transmit the broadcast signals including information about the LCNs for high definition broadcast, and if the reception country of the reception country setting is the same as the country of the original network ID of the received broadcast signal, and if the received broadcast signal includes information about the LCN used for high definition broadcast, then the LCN of the received broadcast signal is registered in the channel list as the selected channel number for the received broadcast signal. Thus, if the country that has introduced new regulations related to the SD/HD simulcasts of the same broadcast is selected as the reception country of the reception country setting, and if the received broadcast signal includes information about the LCN used for high definition broadcast, then the LCN for high definition broadcast is registered in the channel list as the selected channel number for the received broadcast signal.

Also, with the TV 101, if a broadcast signal is received that includes information about the same LCN as a registered LCN for another broadcast signal in the channel list, then the controller 2 determines whether or not both broadcast signals have been sent from the same broadcast station. If both broadcast signals have been sent from the same broadcast station, then the LCN of the broadcast signal with the higher reception signal strength is registered as the selected channel number for the broadcast signal. If the two broadcast signals have been sent from different broadcast stations, then the LCN of the broadcast signal with the higher reception signal strength is registered as the selected channel number for the broadcast signal, and a number within the predetermine channel number group is assigned to the selected channel number for the broadcast signal with the lower reception signal strength. Therefore, if the broadcast signals of the same LCN are received, and if the broadcast signals have been sent from the same broadcast station, then only one is registered, which prevents the same broadcast station (i.e., the same broadcast signals) from being registered redundantly. Also, if the broadcast signals have been spent from different broadcast stations, then the broadcast signals are both registered, and one is registered in a predetermined channel group. Thus, different broadcast stations (different broadcast signals) can be reliably registered, and proper tuning can be accomplished when selecting a channel.

Also, with the TV 101, no selected channel number is registered for a simulcast of high definition broadcasts for which the selected channel number has been registered. If a high definition broadcast channel and a standard definition broadcast channel are simulcast (i.e., broadcast with the same content), and if both channels are registered, then the channel on which the same program is broadcast is registered in duplicate. In view of this, the number of the registered channels can be reduced by registering only the HD-use channel. Furthermore, if just the high definition channel is registered, then this makes it easier for the user to change channels, and allows the user to view a sharp video.

With the TV 101, channel setup according to the reception country in which the broadcast signals are received can be accomplished even in countries where new regulations have been introduced related to the simulcasts, regardless of whether or not the broadcast signal includes the LCN that is specified by the broadcast station.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function.

While only a preferred embodiment has been chosen to illustrate the present invention, it will be apparent to those skilled in the art from this disclosure that various changes and modifications can be made herein without departing from the scope of the invention as defined in the appended claims. The functions of one element can be performed by two, and vice versa. Every feature which is unique from the prior art, alone or in combination with other features, also should be considered a separate description of further inventions by the applicant, including the structural and/or functional concepts embodied by such feature. Thus, the foregoing descriptions of the embodiment according to the present invention are provided for illustration only, and not for the purpose of limiting the invention as defined by the appended claims and their equivalents.

## Claims

1. A digital television broadcast receiver comprising:
a memory section configured to store a channel list associating selected channel numbers with broadcast signals of digital television broadcast, respectively, with each of the broadcast signals including a country identifier indicative of a country from which the broadcast signal is transmitted, the memory section being further configured to store reception country information indicative of a country that is preset as a reception country, and compliance information indicative of countries that have a rule to transmit a broadcast signal with a logical channel number for high-resolution broadcast;
a reception section configured to receive a first broadcast signal of the broadcast signals; and
a control section configured to register the logical channel number for the high-resolution broadcast of the first broadcast signal to the channel list as a selected channel number for the first broadcast signal if the reception country of the reception country information stored in the memory section matches both the country of the country identifier of thc first broadcast signal and one of the countries of the compliance information stored in the memory section, and if the first broadcast signal includes the logical channel number for the high-resolution broadcast.

2. The digital television broadcast receiver according to claim 1, wherein
the control section is further configured to determine whether or not second and third broadcast signals of the broadcast signals are sent from the same broadcast station when the second broadcast signal has a logical channel number that is the same as a logical channel number of the third broadcast signal that has been registered in the channel list,
the control section is further configured to register the logical channel number of one of the second and third broadcast signals that has a higher reception signal strength than the other of the second and third broadcast signals to the channel list as a selected channel number for the one of the second and third broadcast signals when the second and third broadcast signals are sent from the same broadcast station, and
the control section is further configured to register the logical channel number of one of the second and third broadcast signals that has a higher reception signal strength than the other of the second and third broadcast signals to the channel list as a selected channel number for the one of the second and third broadcast signals, and register a predetermined selected channel number that is different from the logical channel number of the other of the second and third broadcast signals to the channel list as a selected channel number for the other of the second and third broadcast signals when the second and third broadcast signals are sent from different broadcast stations.

3. The digital television broadcast receiver according to claim 1, wherein
the control section is further configured to prevent a logical channel number for a simulcast broadcast of the first broadcast signal from being registered in the channel list when the control section registers the logical channel number for the high-resolution broadcast of the first broadcast signal to the channel list.

4. The digital television broadcast receiver according to claim 2, wherein
the control section is further configured to prevent a logical channel number for a simulcast broadcast of the first broadcast signal from being registered in the channel list when the control section registers the logical channel number for the high-resolution broadcast of the first broadcast signal to the channel list.

5. The digital television broadcast receiver according to claim 1, therein
the control section is further configured to register the logical channel number for a standard-resolution broadcast of the first broadcast signal to the channel list as a selected channel number for the first broadcast signal if the reception country of the reception country information stored in the memory section matches the country of the country identifier of the first broadcast signal, if the reception country of the reception country information stored in the memory section does not match any of the countries of the compliance information stored in the memory section, and if the first broadcast signal includes the logical channel number for the standard-resolution broadcast.

6. The digital television broadcast receiver according to claim 5, wherein
the control section is further configured to register one of predetermined selected channel numbers that are sequentially assigned to the broadcast signals to the channel list as a selected channel number for the first broadcast signal if the reception country of the reception country information stored in the memory section matches a country that allows transmitting a broadcast signal without a logical channel number.
